# EUROPEAN PATENT SPECIFICATION

(11) **EP 2 080 696 B1**
(45) Date of publication and mention of the grant of the patent: **18.04.2012**
(21) Application number: 09250066.9
(22) Date of filing: 12.01.2009
(51) Int. Cl.: B62J 6/04

(54) **Straddle type vehicle**
Grätschsitz-Fahrzeug
Véhicule de type à selle à califourchon

(30) Priority: 18.01.2008 JP 2008009845
(43) Date of publication of application: 22.07.2009
(73) Proprietor: Yamaha Hatsudoki Kabushiki Kaisha, Shizuoka-ken Shizuoka 438-8501 (JP)
(72) Inventor: Kageyama, Kouji, Shizuoka-ken, 438-8501 (JP)
(74) Representative: Grünecker, Kinkeldey, Stockmair & Schwanhäusser

(56) References cited:
- EP-A- 1 767 444
- US-A1- 2006 077 676
- US-A1- 2007 230 202

## Description

### Technical Field

The present invention relates to a straddle type vehicle and, more specifically, to a tail lamp attached to a rear portion of the straddle type vehicle according to the preamble of claim 1. Such a vehicle is known from US 2004/170024.

### Background Art

A tail lamp attached to a rear portion of a straddle type vehicle is disclosed in, for example, Japanese Unexamined Patent Application Publication No. 2007-62546. In the same publication, a tail lamp is disposed on a rear portion of a vehicle body cover, and flashers (direction indicators) are disposed on the left and right of the vehicle body cover separately from the tail lamp.

When the left and right flashers are disposed separately from the tail lamp on the rear portion of the vehicle body cover, it is known that the attachment rigidity of the tail lamp can be lowered in order to secure visibility of the flashers. The present invention seeks to improve the visibility of the left and right flashers and also to enhance the attachment rigidity of the tail lamp in the case where the left and right flashers are disposed separately from the tail lamp on the rear portion of the vehicle body cover.

US-2007/230202-A1 discloses a tail lamp unit for a motorycle. The tail lamp unit contains a tail lamp bulb and two flasher bulbs. The three bulbs are covered by an outer lens, accordingly to the preamble of claim 1.

EP-A-1767444 discloses a rear combination lamp for a motorcycle. The rear combination lamp contains a tail lamp which is covered by a lens and right and left rear indicators which are covered by lenses.

### Summary

A straddle type vehicle according to the present invention includes a tail lamp and left and right flashers on a rear portion of a vehicle. The flashers are disposed on left and right sides in the direction of the vehicle width on the rear portion of the vehicle separately from the tail lamp. The tail lamp includes a body portion arranged on the rear portion of the vehicle, and side portions extending from the body portion to the front beyond rear ends of the flashers along left and right side surfaces in the direction of the vehicle width and fixed to a vehicle body. Furthermore, a light-shielding portion is arranged between a light source of the tail lamp and the flashers.

In an embodiment of such a straddle type vehicle, since the tail lamp includes the body portion arranged on the rear portion of the vehicle, and the side portions extending from the body portion to the front beyond the rear ends of the flashers along the left and right side surfaces in the direction of the vehicle width and fixed to the vehicle body, the attachment rigidity of the tail lamp is enhanced. Furthermore, since the light-shielding portion is arranged between the light source of the tail lamp and the flashers, light irradiated from the tail lamp does not interfere with light from the flasher, so that the good visibility of the flasher is achieved.

### Brief Description of the Drawings

Embodiments of the invention are described hereinafter, by way of example only, with reference to the drawings.
Fig. 1 is a left side view of a straddle type vehicle according to an embodiment of the present invention.
Fig. 2 is a left side view of the straddle type vehicle according to the embodiment of the present invention.
Fig. 3 is a back view of the straddle type vehicle according to the embodiment of the present invention.
Fig. 4 is a perspective view of a rear portion of the straddle type vehicle according to the embodiment of the present invention.
Fig. 5 is a side view of a tail lamp according to the embodiment of the present invention.
Fig. 6 is a plan view of the tail lamp according to the embodiment of the present invention.
Fig. 7 is an exploded side view of the tail lamp according to the embodiment of the present invention.
Fig. 8 is an exploded plan view of the tail lamp according to the embodiment of the present invention.
Fig. 9 is a drawing showing a state in which a light-shielding panel is fitted to a lens of the tail lamp according to the embodiment of the present invention.
Fig. 10 is a side view showing an attachment structure of the tail lamp according to another embodiment of the present invention.

### Detailed Description

Referring now to the drawings, a straddle type vehicle according to an embodiment of the present invention will be described. In the drawings, members and portions having the same functions are designated by the same reference numerals in the description. The present invention is not limited to the embodiment shown below. The terms "front", "rear", "left", "right", "upper", and "lower" are based on the directions viewed from a rider when the rider rides on the vehicle in a normal riding position. The front side is indicated as Fr and the rear side is indicated as Rr as needed. The respective drawings are to be viewed in the orientation in which the reference numerals are viewed in the right way.

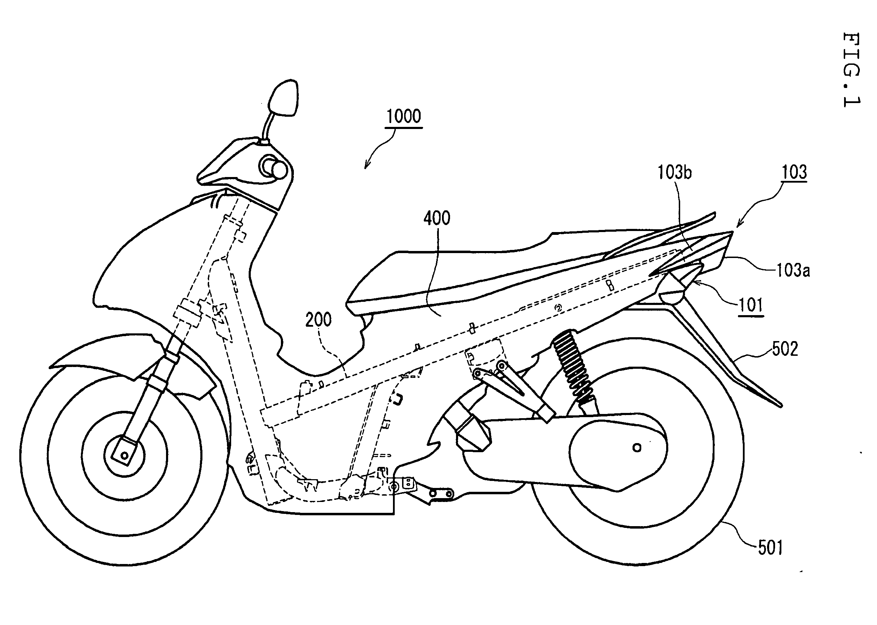

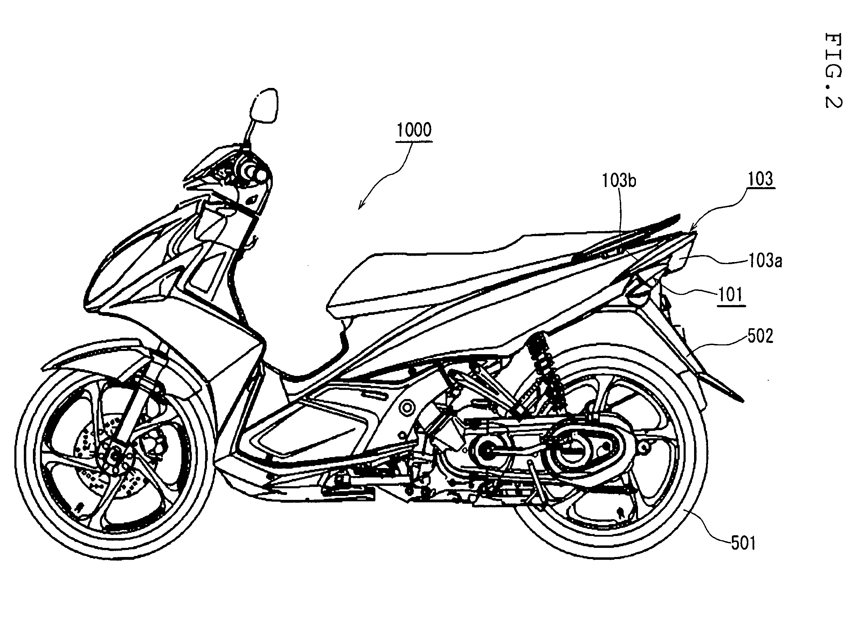

A straddle type vehicle 1000 in this embodiment is, as shown in Fig. 1 and Fig. 2, a scooter type motorcycle, and a vehicle body cover 400 formed of resin is attached to the body frame 200 (see Fig. 2). Mounted on a rear portion of the straddle type vehicle 1000 are a tail lamp 103 which functions mainly as a brake lamp, and flashers 101 which function mainly as direction indicators. In this embodiment, exterior members such as the vehicle body cover 400, the tail lamp 103, and the flashers 101 are attached substantially to the body frame 200 via a bracket (not shown) or the like attached to the body frame 200. Accordingly, a required attachment strength is secured for these exterior members so as not to be rattled due to flowing air or vibrations during travel or the like.

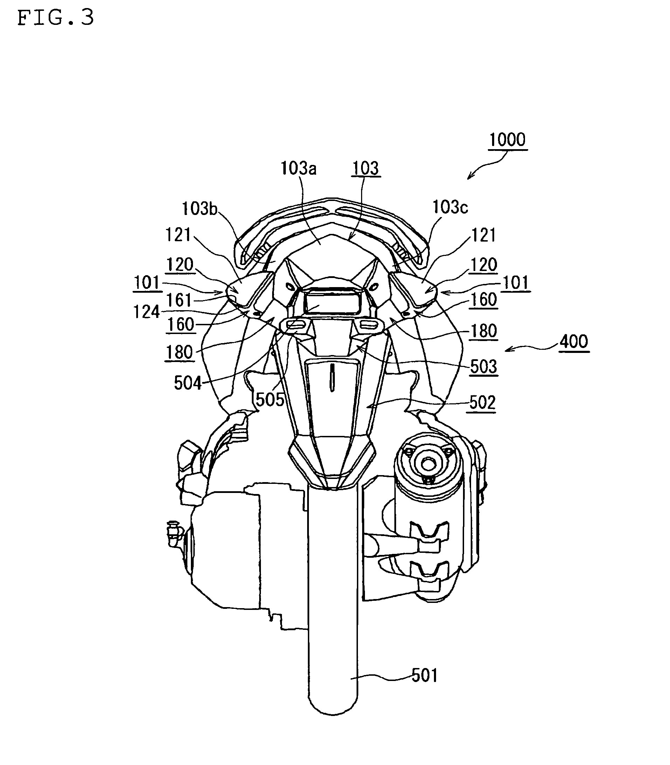

The flashers 101 are disposed on both sides in the direction of the vehicle width on the rear portion of the vehicle separately from the tail lamp 103. In this embodiment, as shown in Fig. 3, the flashers 101 each have a leg portion 180, and are disposed at a proximal portion 503 of a mud shield member 502 (rear fender) disposed on a rear side of a rear wheel 501 via the leg portion 180. In the straddle type vehicle 1000, the proximal portion 503 is provided with a reflection panel 504 which reflects light of trailing vehicles, and an attachment 505 for mounting a number plate.

The flashers 101 each include a lens 120, a cover 160, and the leg portion 180 as shown in Fig. 3. Fig. 3 is a rear view of the straddle type vehicle 1000. However, part of the drawing is simplified, and specifically parts in the vehicle body cover 400 are omitted in the drawing.

The lens 120 is formed of transparent resin (methacryl-based resin (PMMA) in the embodiment) and has a transparent lens surface 121. An outer edge 161 of the cover 160 is fitted to an edge 124 on the outside of the lens 120. The cover 160 is formed of resin (Polypropylene (PP)) in this embodiment. The leg portion 180 is a cylindrical member, and is formed of rubber in this embodiment. The flashers 101 illuminate outside the lens 120 through the transparent lens surface 121 of the lens 120. The direction of light from the flashers 101 is adjusted by a reflector (not shown) or the like disposed inside the flashers 101 so as to be viewable from a predetermined area outside the flashers 101. As shown in Fig. 3, in this embodiment, the leg portions 180 of the flashers 101 are attached to positions slightly lower than the tail lamp 103, and extend from the corresponding positions in the widthwise direction and slightly upward. The cover 160 is attached to a distal end of the leg portion 180, and the lens 120 is disposed on the cover 160 with the lens surface 121 directed rearward and obliquely rearward. Although not shown in the drawing, a light bulb as a light source and a reflector (reflection panel) are disposed in the cover 160.
Electrical wiring to the light bulb is passed through the interior of the cover 160 and the leg portion 180, then through the vehicle body cover 400, and is electrically connected to a battery (not shown) of the straddle type vehicle 1000. In this embodiment, the flashers 101 emit light from the lens surfaces 121 to predetermined areas.

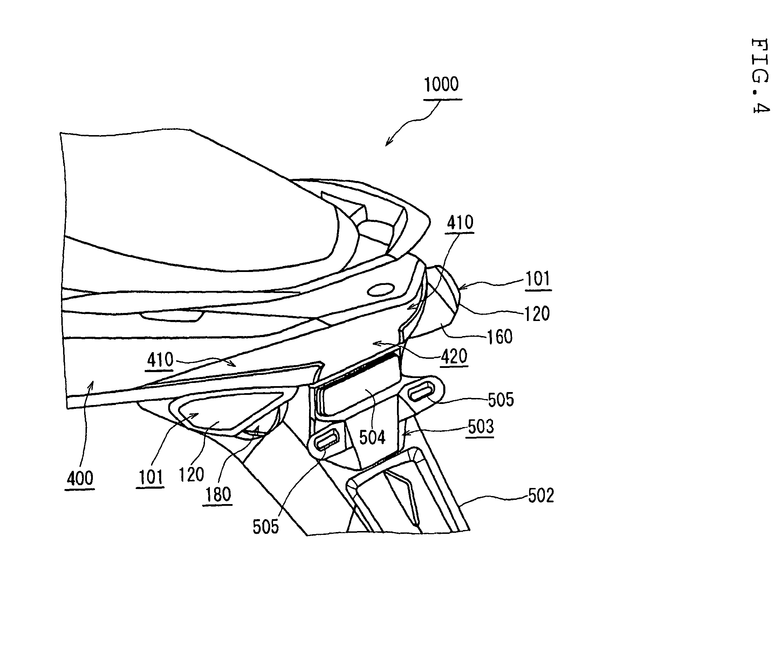

The tail lamp 103 is mounted on a rear portion of the vehicle body cover 400 of the straddle type vehicle 1000. In this embodiment, the vehicle body cover 400 includes a mounting portion 420 for mounting the tail lamp 103 on the rear portion of the vehicle as shown in Fig. 4. Fig. 4 shows a state in which the tail lamp 103 is removed from the rear portion of the vehicle body cover 400 of the straddle type vehicle 1000. For the sake of convenience, the components in the vehicle body cover 400 of the straddle type vehicle 1000 are not shown in the drawing. The vehicle body cover 400 is formed with notches 410 on both sides of the rear portion of the vehicle so as to divide the vehicle body cover 400 into an upper part and a lower part in the mounting portion 420.

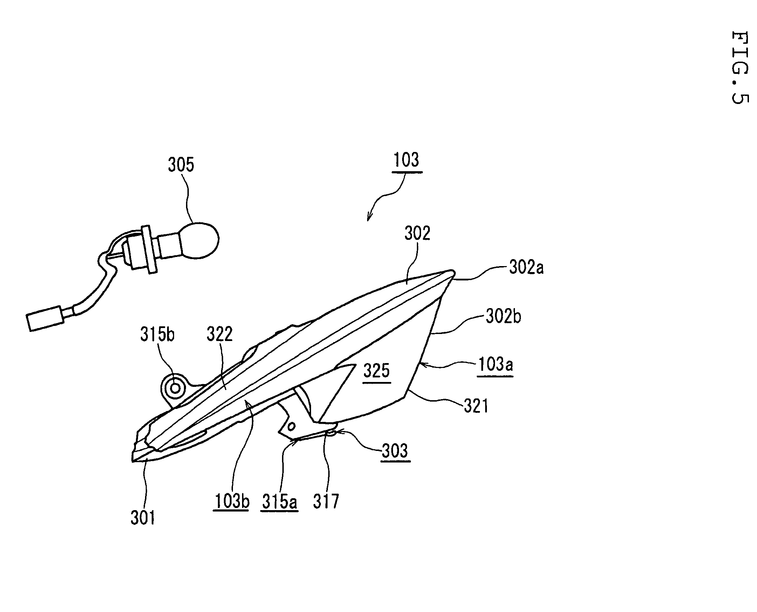

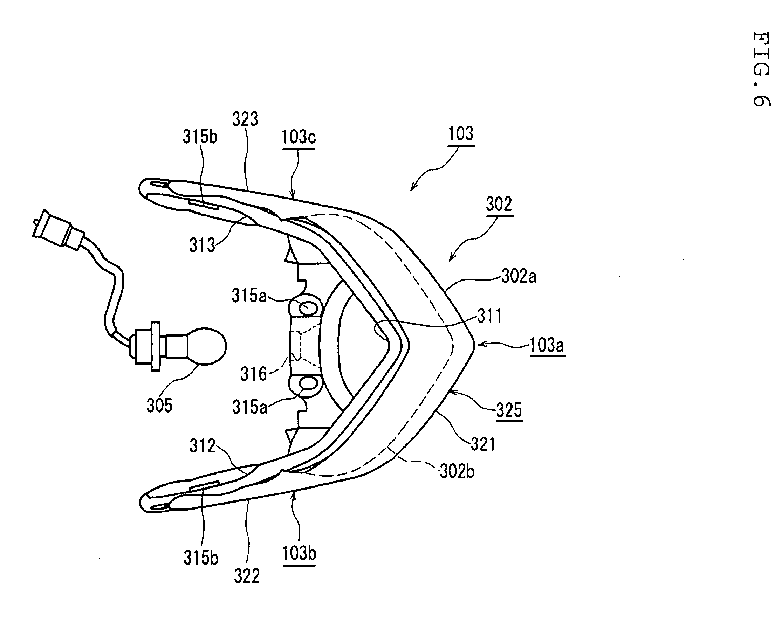

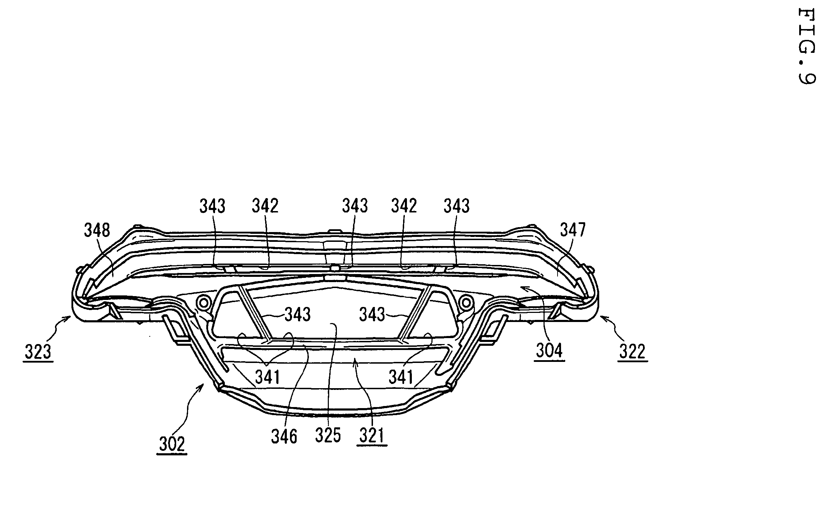

As shown in Fig. 5 and Fig. 6, the tail lamp 103 includes a body portion 103a arranged on the rear portion of the vehicle, and side portions 103b, 103c extending from the body portion 103a toward the front along both side surfaces in the direction of the vehicle width. In this embodiment, as shown in Fig. 1, the side portions 103b, 103c of the tail lamp 103 extend to the front beyond the rear ends of the flashers 101. The tail lamp 103 includes a light-shielding portion 304 (see Fig. 9) arranged between the light source of the tail lamp 103 and the flashers 101.

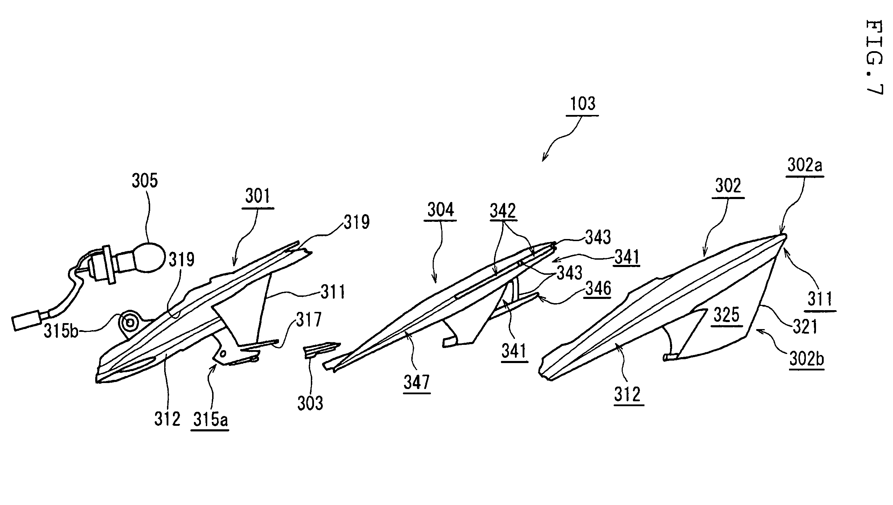

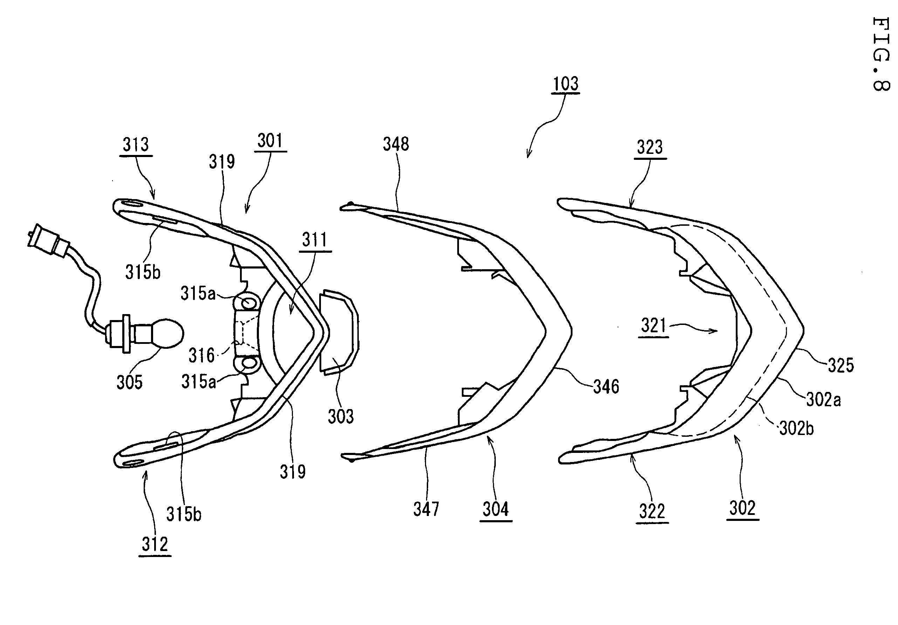

More specifically, the tail lamp 103 includes a housing 301, a first lens 302, a second lens 303, the light-shielding panel 304 as the light-shielding portion, and a light bulb 305 as the light source as shown in Fig. 7 and Fig. 8.

The housing 301 is formed of resin (polypropylene (PP) in this embodiment) and, as shown in Fig. 7 and Fig. 8, includes a base portion 311 disposed on the rear portion of the vehicle body, and side portions 312, 313 extending from the base portion 311 to the both sides in the direction of the vehicle width. The base portion 311 includes a light bulb attachment 316 for attaching mounting the light bulb 305. The base portion 311 and the side portions 312, 313 are fixed to the vehicle body respectively. In this embodiment, fixing portions 315a, 315b to be fixed to the vehicle body respectively are provided inside the base portion 311 (inside when being mounted on the vehicle body cover 400) and upper portions of the side portions 312, 313. As shown in Fig. 6, the light bulb attachment 316 for attaching the light bulb 305 is provided at the center of the base portion 311. In this embodiment, inside the housing 301 is mirror-finished by aluminum-deposition and functions as a reflector. As shown Fig. 7, a second lens disposing portion 317 for disposing the second lens 303 is provided on the lower side of the base portion 311. In this embodiment, the housing 301 includes the fixing portions 315a, 315b respectively on the base portion 311 and the side portions 312, 313 as shown in Fig. 5, and fixes the fixing portions 315a, 315b to the vehicle body cover 400. In this embodiment, as shown in Fig. 7 and Fig. 8, a first lens attachment 319 for attaching the first lens 302 is provided on the outside the base portion 311 and the side portions 312, 313 of the housing 301.

The first lens 302 is formed of a transparent resin (methacryl-based resin (PMMA) in this embodiment). The first lens 302 is aligned with the outside (outside when being mounted to the vehicle body cover 400) of the base portion 311 and the side portions 312, 313 of the housing 301, and constitutes a lens surface 325 of the tail lamp 103 as shown in Fig. 5 and Fig. 6. In this embodiment, as shown in Fig. 6 and Fig. 8, an upper portion 302a of the first lens 302 is protruded outward with respect to a lower portion 302b. Portions 322, 323 corresponding to the side portions 103b, 103c of the tail lamp 103 are fitted to the notches 410 (see Fig. 4) formed on the both sides of the rear portion of the vehicle body cover 400.

The second lens 303 is formed of a transparent resin (methacryl-based resin (PMMA)) and is fitted to the lower portion of the housing 301. In this embodiment, as shown in Fig. 3 and Fig. 4, the straddle type vehicle 1000 has the number plate on the lower side of the tail lamp 103. As shown in Fig. 5 and Fig. 7, the second lens 303 is arranged on the lower portion of the tail lamp 103 for illuminating the number plate by the light from the tail lamp 103.

The light-shielding panel 304 limits the irradiation range of the tail lamp 103. The tail lamp 103 includes the light-shielding panel 304 arranged between the light bulb 305 (light source) of the tail lamp 103 and the flashers 101. The light-shielding panel 304 is formed of a resin (Polycarbonate (PC) in this embodiment), and the surface thereof is mirror-finished by aluminum deposition. The light-shielding portion 304 is disposed inside the first lens 302 and, more specifically, fitted to the inner surface of the first lens 302 as shown in Fig. 9. In this embodiment, the light-shielding panel 304 is formed of a plate member extending continuously from the both left and right side portions 103b, 103c of the tail lamp 103, and an opening 341 and a slit 342 (opening) for allowing passage of light of the light bulb 305 (light source) are formed on the rear portion of the tail lamp 103. In this embodiment, as shown in Fig. 8 and Fig. 9, the light-shielding panel 304 includes a base portion 346 corresponding to a base portion 321 of the first lens 302 and side portions 347, 348 corresponding to the side portions 322, 323 of the first lens 302 respectively, and the opening 341 and the slit 342 are formed at adequate positions.

The side portions 347, 348 of the light-shielding panel 304 extend between the light bulb 305 (light source) and the flashers 101 on the both left and right side portions 103b, 103c of the tail lamp 103. The both side portions 347, 348 of the light-shielding panel 304 continue via the base portion 346. As shown in Fig. 7 and Fig. 8, the light-shielding panel 304 is formed with the opening 341 and the slit 342 for allowing passage of the light from the light bulb 305 at portions such as the rear portion of the tail lamp 103 where the tail lamp 103 is to be lightened up. A beam 343 is provided for securing the strength adequately.

As shown in Fig. 7, Fig. 8, the tail lamp 103 includes the housing 301, the first lens 302, the second lens 303, and the light-shielding panel 304 fitted to each other, and the light bulb 305 is attached to the light bulb attachment 316 of the housing 301. Then, as shown in Fig. 3 and Fig. 4, the body portion 103a of the tail lamp 103 is mounted to the mounting portion 420 surrounded by the vehicle body cover 400 on the rear portion of the straddle type vehicle 1000, and the side portions 103b, 103c of the tail lamp 103 are mounted to the notches 410 which divide the vehicle body cover 400 into the upper part and the lower part in both sides of the rear portion of the vehicle.

As shown in Fig. 3, the straddle type vehicle 1000 includes the flashers 101 disposed on the both sides in the direction of the vehicle width on the rear portion of the vehicle separately from the tail lamp 103. In the straddle type vehicle 1000, the tail lamp 103 extends from the body portion 103a arranged on the rear portion of the vehicle to the front beyond the rear ends of the flashers 101 along the both side surfaces in the direction of the vehicle width, and the side portions 103b, 103c are fixed to the vehicle body. Therefore, the tail lamp 103 is fixed not only to the rear portion of the vehicle, but also to the both side portions of the vehicle, and hence a high attachment rigidity is achieved. Also, the light-shielding panel 304 (light-shielding portion) is arranged between the light bulb 305 of the tail lamp 103 (see Fig. 6) and the flashers 101 (see Fig. 3). Therefore, the light irradiated from the tail lamp 103 does not interfere with the light from the flashers 101, so that the good visibility of the flashers 101 is achieved. In this embodiment, the outline of the tail lamp 103 (the outline of the first lens 302) has a substantially arch shape as a whole in plan view, so that the application of the external force can be released adequately, thereby being hardly broken in case of falling.

In this embodiment, the housing 301 of the tail lamp 103 includes the base portion 311 disposed on the rear portion of the vehicle body and the side portions 312, 313 extending from the base portion 311 to the both sides in the direction of the vehicle width. The base portion 311 and the side portions 312, 313 are fixed to the vehicle body respectively, and a higher attachment strength is achieved.

In this embodiment, as shown in Fig. 9, the light-shielding panel 304 is disposed inside the first lens 302 of the tail lamp 103. In this embodiment, the light-shielding panel 304 is fitted to the inner surface of the first lens 302. In this structure, the first lens 302 which constitutes the shape of the appearance of the tail lamp 103 is reinforced by the light-shielding panel 304 fitted to the inner surface, and hence is hardly broken.

In this embodiment, the light-shielding panel 304 is formed of the plate member extending continuously from the both left and right side portions 103b, 103c of the tail lamp 103, and the opening 341, 342 for allowing passage of light of the light bulb 305 (light source) are formed on the rear portion of the tail lamp 103. In this configuration, the light-shielding panel 304 can be configured with a single member, so that the number of components is reduced and the number of steps in an assembly is also reduced.

A configuration in which the light-shielding panel 304 is fitted to the inner surface of the first lens 302 so that the light-shielding panel 304 partly supports the inside the first lens 302 is also applicable. In this embodiment, the light-shielding panel 304 is formed of a single member to the both side portions 347, 348, and has an arch shape extending along the inner surface of the first lens 302. Therefore, even when the plate member which constitutes the light-shielding panel 304 is thin to some extent, the strength required for reinforcing the first lens 302 is realized.

The vehicle body cover 400 of the straddle type vehicle 1000 is formed with the notches 410 which divide the vehicle body cover 400 into the upper part and the lower part on the both sides of the rear portion, and the first lens 302 is fitted into the notches 410. In this structure, the attachment accuracy and the attachment rigidity of the tail lamp 103 are improved, and the edge of the notches 410 of the vehicle body cover 400 can be fitted to the peripheral edges of the first lens 302. In this case, since the first lens 302 is protected also by the vehicle body cover 400, it can hardly be broken.

The straddle type vehicle according to the embodiment of the present invention has been described thus far. The straddle type vehicle according to the present invention is not limited to the above-described embodiment, and various modifications may be made.

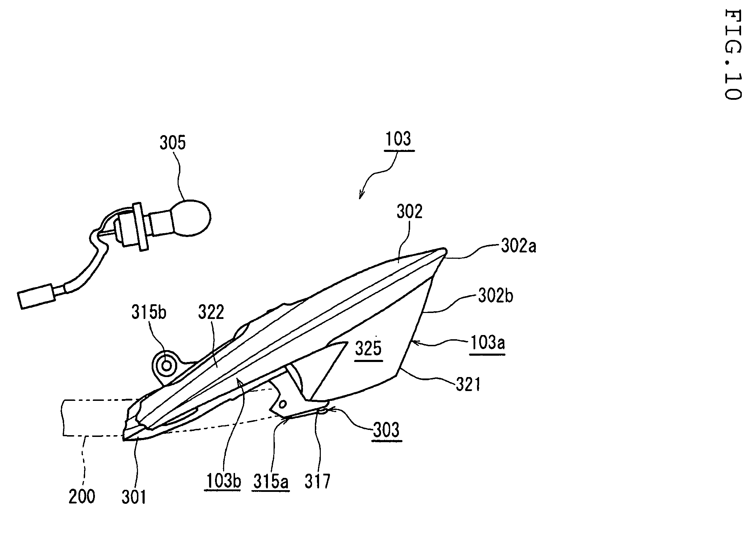

The tail lamp is not limited to the structure exemplified in the embodiment shown above. For example, in the embodiment described above, the housing 301 of the tail lamp 103 is fixed to the vehicle body cover 400. However, the housing 301 may be fixed to the body frame 200 as shown in Fig. 10. In this case, fixation of the housing 301 is achieved by fixing one of the base portion 311 and the side portions 312, 313 (see Fig. 8) to the upper side of the body frame 200 and the other one to the lower side of the body frame 200. More specifically, the fixing portion 315a provided on the base portion 311 is fixed to the lower side of the rear portion of the body frame 200, and the fixing portion 315b provided on the side portions 312, 313 is fixed to the upper side of the rear portion of the body frame 200. In this case, the housing 301 may be attached substantially to the body frame 200 via the bracket, which is attached to the body frame 200. In this manner, by sandwiching the rear portion of the body frame 200 between the base portion 311 and the side portions 312, 313 from above and below, improvement of the rigidity of the tail lamp 103 is realized.

For example, the light bulb is exemplified as the light source, the light source is not limited to the light bulb, and a part which has a function to emit light may be applied and, for example, may be a light-emitting element such as LED. The specific structures of the lens, the housing, and the light-shielding panel are not limited to those in the above-descried embodiment. For example, although the light-shielding panel is exemplified as the light-shielding portion arranged between the light source of the tail lamp and the flashers, the light-shielding portion must simply has a function to shield light, and does not necessarily have to be configured with a panel member. For example, the light-shielding portion may be configured with a seal to be adhered to the inside of the lens. It is also possible to coat a portion to shield light inside the lens with an opaque coating material. Although the structure in which the notches which divide the vehicle body cover into the upper part and the lower part are formed on the both side portions of the rear portion of the straddle type vehicle and the lens of the tail lamp is fitted to the notches is exemplified, the notches may be eliminated from the vehicle body cover and the lens of the tail lamp may not be fitted to the notches.

### Reference Numerals

- 101: flasher
- 103: tail lamp
- 103a: body portion
- 103b, 103c: side portion
- 120: lens
- 121: lens surface
- 124: edge of lens
- 160: cover
- 161: outer edge of cover
- 180: leg portion
- 200: body frame
- 301: housing
- 302: first lens
- 302a: upper portion of first lens
- 302b: lower potion of first lens
- 303: second lens
- 304: light-shielding panel (light-shielding portion)
- 305: light bulb (light source)
- 311: base portion of housing
- 312, 313: side portion of housing
- 315a, 315b: fixing portion
- 316: light bulb attachment
- 317: lens disposing portion
- 321: base portion of first lens
- 322, 323: side portion of first lens
- 325: lens surface
- 341: opening
- 342: slit (opening)
- 343: beam
- 346: base portion of light-shielding panel
- 347, 348: side portion light-shielding panel
- 400: vehicle body cover
- 420: mounting portion
- 501: rear wheel
- 502: mud shield member
- 503: proximal portion
- 504: reflection panel
- 505: attachment of number plate
- 1000: straddle type vehicle

## Claims

1. A straddle type vehicle (1000) comprising: a tail lamp (103) and left and right flashers (101) on a rear portion of the vehicle,
wherein the flashers (101) are disposed on left and right sides in the direction of the vehicle width of the rear portion of the vehicle separately from the tail lamp (103), wherein the tail lamp (103) includes:
a body portion (103a) arranged on the rear portion of the vehicle; and
a light-shielding portion (304) arranged between a light source (305) of the tail lamp (103) and the flashers (101);
**characterized by** the tail lamp (103) further including:
side portions (103b, 103c) extending from the body portion (103a) to the front beyond rear ends of the flashers (101) along left and right side surfaces in the direction of the vehicle width and fixed to a vehicle body (200).

2. The straddle type vehicle (1000) according to Claim 1, wherein the tail lamp (103) includes a housing (301) having the light source (305) disposed therein and a lens (302) fitted to the housing (301), and the housing (301) includes a base portion (311) disposed on the rear portion of the vehicle body (200), and side portions (312, 313) extending from the base portion (311) to the left and right sides in the direction of the vehicle width and the base portion (311) and the side portions (312, 313) are fixed to the vehicle body (200) respectively.

3. The straddle type vehicle (1000) according to Claim 2, wherein one of the base portion (311) and the side portions (312, 313) of the housing (301) is fixed to an upper side of a body frame (200) and the other one of those is fixed to a lower side of the body frame (200).

4. The straddle type vehicle (1000) according to any one of the preceding Claims, wherein the tail lamp (103) includes a housing (301) having the light source (305) disposed therein and a lens (302) fitted to the housing (301), and the light-shielding portion (304) is a light-shielding panel disposed inside the lens (302).

5. The straddle type vehicle (1000) according to Claim 4, wherein the light-shielding panel (304) is fitted to an inner surface of the lens (302).

6. The straddle type vehicle (1000) according to Claim 4 or Claim 5, wherein the light-shielding panel (304) is formed of a panel member extending continuously to both left and right side portions (103b, 103c) of the tail lamp (103), and an opening (341) for allowing passage of light from the light source (305) is formed on the rear portion of the tail lamp (103).

7. The straddle type vehicle (1000) according to Claim 2 or to any one of the preceding Claims when dependent on Claim 2, wherein a vehicle body cover (400) of the straddle type vehicle (1000) is formed with notches (410) which divide the vehicle body cover (400) into an upper part and a lower part on left and right sides of a rear portion, and the lens (302) is fitted into the notches (410).

## Patentansprüche

1. Fahrzeug (1000) vom Grätschsitz- Typ, aufweisend: eine Schlussleuchte (103) und linke und rechte Blinkleuchten (101) an einem rückwärtigen Abschnitt des Fahrzeuges,
wobei die Blinkleuchten (101) auf linken und rechten Seiten in einer Richtung der Breite des Fahrzeuges des rückwärtigen Abschnittes des Fahrzeuges, getrennt von der Schlussleuchte (103), angeordnet sind,
wobei die Schlussleuchte (103) enthält:
einen Karosserieabschnitt (103a), angeordnet an dem rückwärtigen Abschnitt des Fahrzeuges; und
einen lichtabschirmenden Abschnitt (304), angeordnet zwischen einer Lichtquelle (305) der Schlussleuchte (103) und den Blinkleuchten (101);
**gekennzeichnet dadurch, dass** die Schlussleuchte (103) außerdem enthält:
Seitenabschnitte (103b, 103c), die sich von dem Karosserieabschnitt (103) nach vorn über hintere Enden der Blinkleuchten (101) hinaus entlang linker und rechter Seitenoberflächen in der Richtung der Breite des Fahrzeuges erstrecken und an der Fahrzeugkarosserie (200) befestigt sind.

2. Fahrzeug (1000) vom Grätschsitz- Typ nach Anspruch 1, wobei die Schlussleuchte (103) ein Gehäuse (301) enthält, mit einer darin angeordnete Lichtquelle (305), und einer Linse (302), eingesetzt in das Gehäuse (301), und wobei das Gehäuse (301) einen Basisabschnitt (311) enthält, angeordnet an dem rückwärtigen Abschnitt der Fahrzeugkarosserie (200), und Seitenabschnitte (312, 313), die sich von dem Basisabschnitt (311) nach der linken und rechten Seite in der Richtung der Breite des Fahrzeuges erstrecken und wobei der Basisabschnitt und die Seitenabschnitte (312, 313) jeweils an der Fahrzeugkarosserie (200) befestigt sind.

3. Fahrzeug (1000) vom Grätschsitz- Typ nach Anspruch 2, wobei einer von dem Basisabschnitt (311) oder den Seitenabschnitten (312, 313) des Gehäuses an der oberen Seite eines Karosserierahmens (200) befestigt ist und der andere von diesen an einer unteren Seite des Karosserierahmens (200) befestigt ist.

4. Fahrzeug (1000) vom Grätschsitz- Typ nach einem der vorhergehenden Ansprüche, wobei die Schlussleuchte (103) ein Gehäuse (301) enthält, mit einer darin angeordneten Lichtquelle (305) und eine Linse (302), eingesetzt in das Gehäuse, und wobei der lichtabschirmende Abschnitt (304) ein lichtabschirmendes Panel ist, angeordnet innerhalb der Linse (302).

5. Fahrzeug (1000) vom Grätschsitz- Typ nach Anspruch 4, wobei das lichtabschirmende Panel (304) an einer inneren Oberfläche der Linse (302) eingesetzt ist.

6. Fahrzeug (1000) vom Grätschsitz- Typ nach Anspruch 4 oder Anspruch 5, wobei das lichtabschirmende Panel (304) aus einem Panelteil gebildet ist, das sich fortlaufend zu beiden linken und rechten Seitenabschnitten (103b, 103c) der Schlussleuchte (103) erstreckt, und wobei eine Öffnung (341), um dem Licht aus der Lichtquelle (305) zu gestatten hindurchzugehen, an dem rückwärtigen Abschnitt der Schlussleuchte (103) gebildet ist.

7. Fahrzeug (1000) vom Grätschsitz- Typ nach Anspruch 2 oder nach einem der vorhergehenden Ansprüche, sofern abhängig von Anspruch 2, wobei eine Fahrzeugkarosserieabdeckung (400) des Fahrzeuges (1000) vom Grätschsitz- Typ mit Aussparungen (410) gebildet ist, die die Fahrzeugkarosserieabdeckung (400) in einen oberen Teil und einen unteren Teil auf der linken und rechten Seite eines rückwärtigen Abschnittes teilen, und die Linse (302) in die Aussparungen (410) eingesetzt ist.

## Revendications

1. Véhicule du type à enfourcher (1000) comprenant :
un feu arrière (103) et des feux clignotants gauche et droit (101) sur une partie arrière du véhicule,
étant précisé que les feux clignotants (101) sont disposés sur les côtés gauche et droit, dans le sens de la largeur de la partie arrière du véhicule, séparément du feu arrière (103),
et que le feu arrière (103) comprend :
une partie de corps (103a) disposée sur la partie arrière du véhicule ; et
une partie pare-lumière (304) disposée entre une source lumineuse (305) du feu arrière (103) et les feux clignotants (101) ;
**caractérisé en ce que** le feu arrière (103) comprend également :
des parties latérales (103b, 103c) qui s'étendent à partir de la partie de corps (103a) vers l'avant, au-delà des extrémités arrière des feux clignotants (101) le long des surfaces latérales gauche et droite dans le sens de la largeur du véhicule, et qui sont fixées à un corps de véhicule (200).

2. Véhicule du type à enfourcher (1000) selon la revendication 1, étant précisé que le feu arrière (103) comprend un boîtier (301) dans lequel est disposée la source lumineuse (305) et dans lequel est montée une lentille (302), que le boîtier (301) comprend une partie de base (311) qui est disposée sur la partie arrière du corps de véhicule (200), et des parties latérales (312, 313) qui s'étendent à partir de la partie de base (311) vers les côtés gauche et droit dans le sens de la largeur du véhicule, et que la partie de base (311) et les parties latérales (312, 313) sont fixées respectivement au corps de véhicule (200).

3. Véhicule du type à enfourcher (1000) selon la revendication 2, étant précisé que parmi la partie de base (311) et les parties latérales (312, 313) du boîtier (301), l'une est fixée à un côté supérieur d'un cadre (200) tandis que l'autre est fixée à un côté inférieur du cadre (200).

4. Véhicule du type à enfourcher (1000) selon l'une quelconque des revendications précédentes, étant précisé que le feu arrière (103) comprend un boîtier (301) dans lequel est disposée la source lumineuse (305) et dans lequel est montée une lentille (302), et que la partie pare-lumière (304) est une plaque pare-lumière disposée à l'intérieur de la lentille (302).

5. Véhicule du type à enfourcher (1000) selon la revendication 4, étant précisé que la plaque pare-lumière (304) est montée sur une surface intérieure de la lentille (302).

6. Véhicule du type à enfourcher (1000) selon la revendication 4 ou 5, étant précisé que la plaque pare-lumière (304) se compose d'un élément en forme de plaque qui s'étend de manière continue vers les parties latérales gauche et droite (103b, 103c) du feu arrière (103), et qu'une ouverture (341) permettant le passage de la lumière provenant de la source lumineuse (305) est formée sur la partie arrière du feu arrière (103).

7. Véhicule du type à enfourcher (1000) selon la revendication 2 ou l'une quelconque des revendications précédentes lorsqu'elle est dépendante de la revendication 2, étant précisé qu'un carénage (400) du véhicule du type à enfourcher (1000) est pourvu d'encoches (410) qui divisent ledit carénage (400) en une partie supérieure et une partie inférieure sur les côtés gauche et droit d'une partie arrière, et que la lentille (302) est montée dans les encoches (410).
